# EUROPÄISCHE PATENTANMELDUNG

(11) **EP 3 787 165 A1**
(43) Veröffentlichungstag der Anmeldung: **03.03.2021**
(21) Anmeldenummer: 19194913.0
(22) Anmeldetag: 02.09.2019
(51) Int. Cl.: H02M 1/32, H02M 1/00

(54) **VERFAHREN ZUR ZUSTANDSÜBERWACHUNG EINES ELEKTRISCHEN GERÄTS UND ANORDNUNG ZUR DURCHFÜHRUNG EINES SOLCHEN VERFAHRENS**

(71) Anmelder: Siemens Aktiengesellschaft, 80333 München (DE)
(72) Erfinder: Münkel, Andreas, 91052 Erlangen (DE); Zacharias, Dominik, 90765 Fürth (DE)

(57) **Zusammenfassung**

Die Erfindung betrifft ein Verfahren zur Zustandsüberwachung eines elektrischen Geräts, insbesondere eines Stromrichters, bevorzugt eines Frequenzumrichters (1), umfassend die folgenden Schritte:
- Messung von Zustandsgrößen direkt am elektrischen Gerät und/oder in der Umgebung des elektrischen Geräts und Bereitstellen von korrespondierenden Messsignalen;
- Übertragung der Messsignale an eine Umwandlungseinrichtung (3) ;
- Umwandlung der Messsignale in ein normiertes Datenformat durch die Umwandlungseinrichtung (3);
wobei die in das normierte Datenformat umgewandelten Messdaten durch eine geeignete Übertragungseinrichtung (10) in eine Cloud (11) hochgeladen werden und dort verarbeitet werden und für die Zustandsüberwachung herangezogen werden. Ferner betrifft die Erfindung eine Anordnung zur Durchführung eines Verfahrens zur Zustandsüberwachung eines elektrischen Geräts, insbesondere eines Stromrichters und bevorzugt eines Frequenzumrichters (1).

## Beschreibung

Die vorliegende Erfindung betrifft ein Verfahren zur Zustandsüberwachung eines elektrischen Geräts, insbesondere eines Stromrichters, bevorzugt eines Frequenzumrichters.

Darüber hinaus betrifft die vorliegende Erfindung eine Anordnung zur Durchführung eines Verfahrens zur Zustandsüberwachung eines elektrischen Geräts, insbesondere eines Stromrichters und bevorzugt eines Frequenzumrichters.

Elektrische Geräte verschiedenster Art und Ausführung werden in einer Vielzahl von Industriebereichen, insbesondere im Bereich der Automatisierungstechnik eingesetzt. Eine besondere Rolle im Bereich der Automatisierungstechnik spielen Elektromotoren, die für vielfältige Bewegungsaufgaben eingesetzt werden. Solche Elektromotoren sind zumeist in den Industrieanlagen verbaut und mit einer Leistungsquelle über entsprechend dimensionierte Stromkabel verbunden. Zur Bereitstellung entsprechender Ströme, bzw. Spannungen werden häufig so genannte Stromrichter verwendet. Diese sind insbesondere dadurch gekennzeichnet, dass sie keine bewegten mechanischen Teile enthalten und geeignet sind, Eingangsströme mit einer definierten Eingangsspannung und einer definierten Eingangsfrequenz in Ausgangsströme mit einer anderen Spannung und einer anderen Frequenz, oder einer anderen Stromart (Gleichstrom oder Wechselstrom) umzuwandeln. Eine besondere Form der Stromrichter stellen dabei die Frequenzumrichter dar, die einen Eingangsstrom oder eine Eingangsspannung, beispielsweise einen Wechselstrom oder einen Drehstrom, in mindestens einen Ausgangswechselstrom und/oder mindestens eine Ausgangswechselspannung mit einer einstellbaren Frequenz umsetzen. Ein solcher Frequenzumrichter wird bevorzugt in Verbindung mit einem Wechselstrom- oder Drehstrommotor eingesetzt und ermöglicht es, durch die Anpassung der Frequenz des Ausgangswechselstroms, bzw. der Ausgangswechselspannung die Drehzahl des Motors einzustellen.

Um derartige elektrische Geräte, beispielsweise einen Frequenzumrichter, vor äußeren Einflüssen zu schützen, werden diese zumeist in Schaltschränken angeordnet. Die Schaltschränke ermöglichen eine von äußeren mechanischen Einflüssen weitgehend geschützte Unterbringung von sensiblen elektrischen Geräten. Gleichwohl können sich auch in einem Schaltschrank die Umgebungsbedingungen ändern, was sich auf die Lebensdauer, bzw. die Betriebsbereitschaft eines elektrischen Geräts auswirken kann. Beispielsweise kann die Lebensdauer eines elektrischen Gerätes negativ beeinflusst werden, wenn eine hohe Luftfeuchtigkeit vorliegt und Temperaturschwankungen auftreten, so dass sich Feuchtigkeit auf elektrischen Komponenten abscheidet. Weitere Einflussfaktoren, welche die Lebensdauer beeinflussen können, sind Vibrationen oder Beschleunigungen sein, denen das elektrische Gerät unterworfen ist, wenn beispielsweise Schwingungen durch die verarbeiteten Wechsel- und Drehströme auftreten. Beschädigungen können des Weiteren auftreten, wenn das elektrische Gerät nicht hinreichend von der Umgebung elektrisch isoliert ist und somit unbeabsichtigte Schleichströme auftreten, durch welche einzelne Komponenten beschädigt werden können.

Aus der US 6041287 A ist eine Anordnung zur Zustandsüberwachung einer dynamoelektrischen Maschine bekannt. Dabei ist vorgesehen, kontinuierlich Zustandsgrößen direkt an der oder in der Nähe von der elektrodynamischen Maschine zu messen und die in geeigneter Weise aufbereiteten Messdaten an ein fabrikinternes Netzwerk zu übertragen, um über einen Computer online den Zustand der elektrodynamischen Maschine zu überwachen.

Auch wenn sich ein derartiges Verfahren und System zur Überwachung einer elektrodynamischen Maschine, insbesondere eines Motors, in der Praxis durchaus bewährt hat, so wird zu Teilen als nachteilig angesehen, dass bei komplexen, insbesondere über mehrere Standorte verteilten Fertigungsstrukturen eines Unternehmens sich eine Überwachung schwierig darstellen und insbesondere eine systematische, auch standortübergreifende Aufbereitung der Daten mit einem hohen Aufwand verbunden sein kann.

Aufgabe der vorliegenden Erfindung ist es daher, ein Verfahren zur Zustandsüberwachung eines elektrischen Geräts, insbesondere eines Stromrichters, bevorzugt eines Frequenzumrichters sowie eine Anordnung zur Durchführung eines solchen Verfahrens zu schaffen, bei welchen die zuvor genannten Nachteile vermieden werden.

Diese Aufgabe wird gelöst durch ein Verfahren zur Zustandsüberwachung eines elektrischen Geräts, insbesondere eines Stromrichters, bevorzugt eines Frequenzumrichters, umfassend die folgenden Schritte:
- Messung von Zustandsgrößen direkt am elektrischen Gerät und/oder in der Umgebung des elektrischen Geräts und Bereitstellen von korrespondierenden Messsignalen;
- Übertragung der Messsignale an eine Umwandlungseinrichtung;
- Umwandlung der Messsignale in ein normiertes Datenformat durch die Umwandlungseinrichtung;
wobei die in das normierte Datenformat umgewandelten Messdaten durch eine geeignete Übertragungseinrichtung in eine Cloud hochgeladen werden und dort verarbeitet werden und für die Zustandsüberwachung herangezogen werden.

Ferner ist die der Erfindung zugrunde liegende Aufgabe durch eine Anordnung zur Durchführung eines solchen Verfahrens gelöst, wobei die Anordnung mindestens ein Sensorelement zur Messung der Zustandsgrößen, eine Umwandlungseinrichtung, welche mit dem Sensorelement kommunikativ verbunden ist, zum Umwandeln des bereitgestellten Messsignals in ein normiertes Datenformat, insbesondere in einen Datenbaustein, und eine Übertragungseinrichtung, welche mit der Umwandlungseinrichtung kommunikativ kabellos oder kabelgebunden verbunden ist, sowie ausgebildet und/oder eingerichtet ist, Daten an eine Cloud zu übertragen.

Der Erfindung liegt somit die Überlegung zugrunde, durch das Hochladen umgewandelter Messdaten in eine Cloud, welche bevorzugt über das Internet zugänglich ist, jederzeit und von jedem Ort aus auf die Daten zugreifen und die Daten zentral weiter verarbeiten und für die Zustandsüberwachung eines oder mehrerer elektrischer Geräte, insbesondere eines oder mehrerer Stromrichter, bevorzugt eines oder mehrerer Frequenzumrichter, nutzen zu können.

In vorteilhafter Ausgestaltung wird die erfindungsgemäße Zustandsüberwachung nicht nur für ein Gerät durchgeführt sondern für zwei oder mehre Geräte, etwa zwei oder mehr Stromrichter, insbesondere Frequenzumrichter. Die mehreren Geräte können sich dann insbesondere an verschiedenen Standorten befinden, etwa an verschiedenen Stellen in einer größeren Maschine bzw. Anlage oder auch zu verschiedenen Maschinen bzw. Analgen gehören. Entsprechend können in vorteilhafter Ausgestaltung mehrere erfindungsgemäße Anordnungen zum Einsatz kommen, insbesondere an verschiedenen Standorten.

Bei einer Cloud handelt es sich insbesondere um eine Infrastruktur, welche beispielsweise über das Internet verfügbar gemacht wird und welche in der Regel Speicherplatz, Rechenleistung und/oder Anwendungssoftware bereitstellt, ohne dass entsprechende Infrastrukturen auf einem lokalen Rechner installiert und gespeichert sein müssen. Bei einer Cloud wird die Hardware in der Regel nicht von dem Nutzer einer Anwendung selbst betrieben oder bereitgestellt. Unter einer Cloud bzw. Cloud-Computing kann insbesondere die Bereitstellung von IT-Infrastruktur als Dienstleistung ggf. von einem entfernten Standort aus zu verstehen sein. Eine Cloud kann über das Internet erreichbar sein, oder auch von einem Unternehmen als sogenannte private Cloud betrieben werden, bei welcher die IT-Infrastruktur über ein Netzwerk, z.B. ein Intranet des Unternehmens, erreichbar ist.

Dass die umgewandelten Messdaten in eine Cloud hochgeladen, also an/in eine Cloud übertragen werden, bedeutet insbesondere bzw. schließt insbesondere mit ein, dass diese an eine nicht lokal bei sondern entfernt von dem zu überwachenden Gerät angeordnete IT-Infrastruktur übertragen werden, beispielsweise über das Internet.

Eine industriell genutzte Cloud ist zum Beispiel die so genannte Mindsphere-Umgebung, welche von der Siemens AG bereitgestellt wird. In dieser ist es möglich, Vorgänge und Prozesse umfassend von einem beliebigen Ort auf der Welt aus zu überwachen, sofern ein Internetzugang zur Verfügung steht. Insbesondere wird es dadurch ermöglicht, bei einer komplexen Automatisierungs-, etwa Fertigungsstruktur, die über mehrere Standorte verteilt ist, eine zentrale Überwachung der verschiedenen Prozessparameter vorzunehmen.

Das Heranziehen der verarbeiteten Daten für die Zustandsüberwachung kann ebenfalls - zumindest teilweise - in der Cloud bzw. unter Nutzung der Cloud erfolgen.

Auch kann wenigstens eine zum Beispiel auf einem Mobiltelefon oder Tablet installierte App und/oder eine auf einem lokalen PC installierte Anwendung von einem Nutzer verwendet werden. Mittels wenigstens einer App kann auf Daten in der Cloud zugegriffen werden. Über eine App bzw. Anwendung können einem Nutzer beispielsweise in der Cloud befindliche Daten visualisiert werden. Über eine App bzw. Anwendung kann ein Nutzer alternativ oder zusätzlich Meldungen und/oder Informationen zum Zustand eines oder auch mehrerer überwachter Geräte erhalten. Unter Nutzung wenigstens einer App bzw. Anwendung kann alternativ oder zusätzlich eine (gegebenenfalls weitere) Analyse von an die Cloud übermittelten Daten erfolgen.

Die Zustandsüberwachung erfolgt bevorzugt anhand entsprechender Zustandsgrößen, welche Einfluss auf die Betriebsbereitschaft und die Lebensdauer eines elektrischen Geräts haben. Bevorzugt ist wenigstens eine der gemessenen Zustandsgrößen durch einen Umgebungsparameter des oder des jeweiligen elektrischen Gerätes gegeben, zum Beispiel durch die Temperatur und/oder die Luftfeuchtigkeit und/oder die Zusammensetzung der das bzw. das jeweilige Gerät umgebenden Luft.

Es können die ermittelten IST-Werte mit vorgegebenen SOLL-Werten verglichen werden oder die Änderung von IST-Werten betrachtet werden, um daraus Rückschlüsse auf die Betriebsbereitschaft und/oder die Lebensdauer eines elektrischen Geräts zu ziehen. Ein Vergleich von in die Cloud hochgeladenen IST-Werten mit SOLL-Werten stellt eine beispielshafte Verarbeitung hochgeladener Daten in der Cloud dar. Eine Analyse der IST-Werte, insbesondere Betrachtung der Änderung der IST-Werte stellt ein weiteres Beispiel einer Verarbeitung hochgeladener Daten in der Cloud dar.

In weiterer Ausgestaltung des erfindungsgemäßen Verfahrens können als Zustandsgrößen die Temperatur und/oder die Luftfeuchtigkeit und/oder akustische Signale und/oder Vibrationen und/oder Beschleunigungen und/oder der Isolationswiderstand und/oder die Zusammensetzung der Umgebungsluft gemessen werden. Demzufolge ist die erfindungsgemäße Anordnung bevorzugt dadurch gekennzeichnet, dass das mindestens eine Sensorelement einen Sensor zur Temperaturmessung, insbesondere mittels Infrarot-Messung, und/oder einen Sensor zur Messung der Luftfeuchtigkeit und/oder einen Sensor zur Messung akustischer Signale und/oder einen Sensor zur Messung von Vibrationen und/oder einen Sensor zur Messung von Beschleunigungen und/oder einen Sensor zur Messung der Gaszusammensetzung und/oder einen Sensor zur Widerstandsmessung aufweist.

Die Notwendigkeit einer Messung der Temperatur ist bevorzugt gegeben, weil elektrische Eigenschaften von Materialien stark temperaturabhängig sind und somit die Lebensdauer eines elektrischen Geräts entscheidend von der Temperatur beeinflusst wird. Eine Temperaturmessung mittels Infrarot-Messung ist besonders geeignet, wenn ein Sensor nicht unmittelbar am elektrischen Gerät selbst, sondern bevorzugt in einiger Entfernung zu diesem angebracht wird, was insbesondere dann sinnvoll sein kann, wenn ein Sensor nachträglich montiert werden soll. In gleicher Weise ist die Luftfeuchtigkeit relevant für die Lebensdauer eines elektrischen Geräts, da bei zu hoher Luftfeuchtigkeit verbunden mit Temperaturschwankungen das Risiko des Niederschlagens von Feuchtigkeit auf elektrischen Komponenten besteht. Über die Messung akustischer Signale und Vibrationen, sowie von Beschleunigungen können Schwingungen erkannt werden, welche elektrische Komponenten insbesondere mechanisch beanspruchen, bzw. auf Fehlfunktionen dieser hinweisen können. Um Beschädigungen von elektrischen Komponenten durch Schleichströme zu vermeiden, kann eine kontinuierliche oder wiederholende oder zyklische Messung des Isolationswiderstands sinnvoll sein, um eine Beeinflussung durch andere, möglicherweise im gleichen Schaltschrank angeordnete elektrische Komponenten zu vermeiden. Durch eine Überwachung der Gaszusammensetzung der Umgebungsluft kann insbesondere frühzeitig erkannt werden, wenn Komponenten verschmoren oder durchglühen und dabei oxidieren. Ferner können Fremdgase, welche die Alterung oder Korrosion begünstigen, erkannt werden.

In bevorzugter Ausgestaltung des Verfahrens ist vorgesehen, dass die Messung der Zustandsgrößen in einem Schaltschrank, in welchem das elektrische Gerät angeordnet ist, stattfindet. Demzufolge ist die erfindungsgemäße Anordnung bevorzugt dadurch gekennzeichnet, dass das mindestens eine Sensorelement Befestigungsmittel zum Anbringen in einem Schaltschrank, insbesondere an einer Hutprofilschiene, oder an einem elektrischen Gerät, insbesondere an einem Stromrichter, bevorzugt an einem Frequenzumrichter aufweist. Das mindestens eine Sensorelement kann somit entweder am elektrischen Gerät angebracht sein, so dass die entsprechenden Zustandsgrößen direkt am elektrischen Gerät gemessen werden. Unter einer direkten Anbringung, bzw. einer direkten Messung am elektrischen Gerät ist zu verstehen, dass das mindestens eine Sensorelement in körperlichem Kontakt zum betreffenden elektrischen Gerät, insbesondere einem Frequenzumrichter steht und somit in der Lage ist, zum Beispiel unmittelbar die Oberflächentemperatur oder am elektrischen Gerät auftretende Vibrationen zu messen. Denkbar ist auch, dass das Sensorelement teilweise oder vollständig in das elektrische Gerät integriert ist. Alternativ oder ergänzend kann mindestens ein Sensorelement in der Umgebung angeordnet sein, wobei es - bei Unterbringung des elektrischen Geräts in einem Schaltschrank - bevorzugt ebenfalls in diesem positioniert ist und beispielsweise die im Schaltschrank herrschende Temperatur oder Luftfeuchtigkeit in der Umgebung des elektrischen Geräts erfassen kann.

Bevorzugt ist bei der erfindungsgemäßen Anordnung das mindestens eine Sensorelement industrietauglich ausgeführt, insbesondere als Schaltschrankgerät ausgebildet, und/oder weist eine Schutzart von IP20 oder höher auf. Unter einer industrietauglichen Ausgestaltung versteht man eine hinreichend robuste Ausführung, die sich an den geltenden Regelwerken und Normen für elektrische Geräte in Industrieanwendungen orientiert. Die Schutzart definiert den konkreten Schutz des Sensorelements gegen Fremdkörper, gegen Berührung und gegen Wasser. Ein Schaltschrankgerät sollte dabei gegen feste Fremdkörper mit einem Durchmesser von > 12,5 mm und gegen den Zugang mit einem menschlichen Finger geschützt sein, ein besonderer Schutz gegen Wasser ist aufgrund der Unterbringung im Schaltschrank nicht erforderlich. Die entspricht konkret der Schutzart IP20.

In weiterer Ausgestaltung des erfindungsgemäßen Verfahrens kann vorgesehen sein, dass die Messsignale als Analogsignale, insbesondere als Ströme, bevorzugt zwischen 4 und 20 mA, oder als Digital-Signale bereitgestellt werden. Demzufolge ist bei einer Anordnung zur Durchführung des erfindungsgemäßen Verfahrens das mindestens eine Sensorelement dadurch gekennzeichnet, dass es einen Ausgang für ein Analogsignal, insbesondere für ein Stromsignal, bevorzugt von 4 bis 20 mA, oder eine BUS-Schnittstelle, insbesondere eine Profibus-Schnittstelle, aufweist. Einem Analogsignal, insbesondere bei einem Strom zwischen 4 und 20 mA, welcher der Zustandsgröße zugeordnet wird, stellt eine einfache und effiziente Möglichkeit dar, ein Messsignal an eine Umwandlungseinrichtung zu kommunizieren. Durch einen Mindeststrom von 4 mA wird gleichzeitig sichergestellt, dass eine fehlerhafte oder defekte Übertragung erkannt wird. Alternativ ist es auch denkbar, dass das mindestens eine Sensorelement über eine BUS-Schnittstelle, d.h. über Digitalsignale mit der Umwandlungseinrichtung kommuniziert. Möglich ist beispielsweise eine Profinet-Verbindung, wie sie bei Geräten der Siemens AG oftmals vorhanden ist.

In konkreter Ausgestaltung des erfindungsgemäßen Verfahrens können die Messsignale in der Umwandlungseinrichtung in einen Datenbaustein umgewandelt oder abgelegt werden. Ein Datenbaustein bildet ein Objekt in der Programmstruktur einer Steuerung, insbesondere einer speicherprogrammierbaren Steuerung, und dient dazu, beispielsweise verschiedene Messdaten, insbesondere von verschiedenen Zustandsgrößen, gemeinsam in einem Datenobjekt abzulegen. Somit bildet der Datenbaustein als Programmobjekt ein normiertes Datenformat, in welchem die Messdaten von der Messung mehrerer Zustandsgrößen gemeinsam abgelegt werden können.

Dazu korrespondierend ist die Anordnung zur Durchführung eines erfindungsgemäßen Verfahrens bevorzugt dadurch gekennzeichnet, dass die Umwandlungseinrichtung als speicherprogrammierbare Steuerung ausgebildet ist. Speicherprogrammierbare Steuerungen, z.B. Simatic-Steuerungen der Siemens AG, die konkret unter den Bezeichnungen S7-1200 oder S7-1500 angeboten werden, sind in einer Vielzahl von Industrieanwendungen weit verbreitet und können flexibel zur Steuerung oder Regelung von Maschinen, sowie auch zur Verarbeitung von Messdaten eingesetzt und auf digitaler Basis individuell programmiert werden. Speicherprogrammierbare Steuerungen sind zumeist modular aufgebaut und besitzen in der Regel eine zentrale Rechnereinheit (CPU), an welche weitere Baugruppen nach Bedarf modular angeschlossen werden können. Bei den weiteren Baugruppen kann es sich um Signalbaugruppen, die Eingänge und/oder Ausgänge für Digital- und/oder Analogsignale aufweisen, oder Kommunikationsbaugruppen, die zur Kommunikation mit anderen elektrischen Geräten über genormte Schnittstellen vorgesehen sind, handeln. Die Baugruppen können mit der zentralen Rechnereinheit über BUS-Verbindungen gekoppelt sein.

Zur kommunikativen Verbindung mit dem mindestens einen Sensorelement kann die Umwandlungseinrichtung in an sich bekannter Weise einen Eingang für ein Analogsignal und/oder eine BUS-Schnittstelle, insbesondere eine Profibus-Schnittstelle, und/oder eine serielle Schnittstelle, insbesondere eine RS232- oder RS485-Schnittstelle, aufweisen. Dazu können, wenn die Umwandlungseinrichtung als speicherprogrammierbare Steuerung ausgebildet ist, entsprechende Eingangsbaugruppen vorgesehen sein. Bei einer RS232-Schnittstelle handelt es sich um eine normierte Schnittstelle mit neun Polen. Diese können flexibel mit verschiedenen Signalen belegt werden.

Zur weiteren Übertragung der umgewandelten Messdaten in die Übertragungseinrichtung weist die Umwandlungseinrichtung in bevorzugter Weise Ausgänge für Signale auf, insbesondere in Form einer BUS-Schnittstelle und/oder einer kabellosen Schnittstelle, insbesondere einer Mobilfunk-Schnittstelle. Eine kabelgebundene Verbindung zu der Übertragungseinrichtung kommt vor allem dann infrage, wenn die Übertragungseinrichtung in dem gleichen Schaltschrank wie die Umwandlungseinrichtung angeordnet ist. Prinzipiell ist es auch denkbar, dass die Umwandlungseinrichtung und die Übertragungseinrichtung eine feste Einheit bilden, wobei beispielsweise die Übertragungseinrichtung als einzelne Baugruppe einer größeren speicherprogrammierbaren Steuerung ausgebildet ist. In einem solchen Fall ist die die Übertragungseinrichtung bildende Baugruppe über ein BUS-System mit den anderen Baugruppen der speicherprogrammierbaren Steuerung verbunden.

Zur Übertragung der in das normierte Datenformat umgewandelten Messdaten weist die Übertragungseinrichtung vorzugsweise mindestens eine USB-Schnittstelle und/oder eine serielle Schnittstelle und/oder eine LAN-Schnittstelle auf. Alternativ kann die Übertragungseinrichtung ferner kabellose Schnittstellen, insbesondere eine Mobilfunk-Schnittstelle aufweisen, wenn die in das normierte Datenformat umgewandelten Messdaten nicht kabelgebunden in eine Cloud hochgeladen werden können.

Bevorzugt ist das erfindungsgemäße Verfahren zur Zustandsüberwachung eines elektrischen Geräts, insbesondere eines Stromrichters, bevorzugt eines Frequenzumrichters dadurch gekennzeichnet, dass die in das normierte Datenformat umgewandelten Messdaten an eine Cloud-Plattform übertragen werden. Unter einer Cloud-Plattform ist dabei zu verstehen, dass eine Cloud mit einer vorgegebenen Struktur versehen ist, in welche sich die Messdaten einfügen lassen. Eine solche Cloud-Plattform wird unter anderem durch die Mindsphere-Umgebung der Siemens AG gebildet.

In weiterer Ausgestaltung des erfindungsgemäßen Verfahrens findet, gegebenenfalls unter Nutzung wenigstens einer auf die Cloud zugreifenden App, ein Abgleich der an die Cloud übertragenen Messdaten mit vorgegebenen SOLL-Werten statt. Ferner kann bei einer definierten Abweichung der IST-Werte von den SOLL-Werten eine Meldung an einen Nutzer des elektrischen Geräts automatisiert, bevorzugt über eine App, stattfinden. Die Cloud kann somit mit einer Programmstruktur versehen sein, mittels derer die IST-Werte durch Abgleich mit vorgegebenen oder vorgebbaren SOLL-Werten überwacht werden und automatisiert ein Alarm an einen Nutzer stattfindet, wenn die IST-Werte zu stark von den SOLL-Werten abweichen. Dazu können vom Nutzer oder ausgehend von Erfahrungswerten entsprechende SOLL-Werte definiert werden. Dadurch wird es ermöglicht, für das elektrische Gerät nachteilige Umgebungsbedingungen, durch welche die Lebensdauer reduziert werden kann und/oder eine frühere Wartung erforderlich wird, frühzeitig zu erkennen.

Gemäß einer präferierten Ausführungsform des erfindungsgemäßen Verfahrens werden, insbesondere unter Nutzung wenigstens einer auf die Cloud zugreifenden App, die IST-Werte der gemessenen Zustandsgrößen bevorzugt kontinuierlich oder wiederholend oder zyklisch überwacht.

Alternativ oder zusätzlich kann vorgesehen sein, dass - insbesondere unter Nutzung wenigstens einer auf die Cloud zugreifenden App - abhängig von den IST-Werten der gemessenen Zustandsgrößen, insbesondere abhängig vom Verlauf der IST-Werte, Vorhersagen über das zukünftige Verhalten des elektrischen Geräts getroffen und/oder Wartungspläne erstellt und/oder Wartungshinweise an einen Nutzer des entsprechenden Geräts übermittelt werden. Dadurch kann zum Beispiel bei einer Abweichung der IST-Werte der Umgebungsbedingungen eines elektrischen Geräts frühzeitig das Wartungsintervall angepasst werden. Stellt sich beispielsweise heraus, dass über einen längeren Zeitraum die Luftfeuchtigkeit zu hoch ist und gleichzeitig Temperaturschwankungen in der Umgebung des elektrischen Geräts auftreten, so kann das Wartungsintervall verkürzt werden, um Ausfallzeiten zu vermeiden und frühzeitig beispielsweise durch entstandene Feuchtigkeit beschädigte Bauteile austauschen zu können. Derartige Hinweise oder Pläne können u.a. über eine App, welche ein Nutzer beispielsweise auf einem Mobiltelefon oder einem Tablet installiert hat, von der Cloud an ihn übermittelt werden. Alternativ ist es auch denkbar, bei Abweichungen der IST-Werte von den vorgegebenen SOLL-Werten den Leistungsbereich des Geräts einzuschränken, so dass bei von einem Idealbereich abweichenden Umgebungsbedingungen das Gerät nicht unter Volllast betrieben wird.

Weiterhin können die an die Cloud übertragenen Messdaten mit Hilfe mindestens einer künstlichen Intelligenz, insbesondere wenigstens einer angelernten künstlichen Intelligenz, ausgewertet werden. Eine künstliche Intelligenz kann insbesondere wenigstens ein neuronales Netz umfassen oder durch wenigstens ein neuronales Netz gegeben sein. Eine angelernte/trainierte künstliche Intelligenz kann entsprechend wenigstens ein angelerntes/trainiertes neuronales Netz umfassen oder durch wenigstens ein angelerntes/trainiertes neuronales Netz gegeben sein. Eine angelernt künstliche Intelligenz kann in der Cloud bereitgestellt werden.

Die Verwendung einer künstlichen Intelligenz ermöglicht es beispielsweise, insbesondere in einer Cloud eine Vielzahl von elektrischen Geräten, bevorzugt gleichen oder gleichartigen Geräten an verschiedenen Standorten zu überwachen und einen Zusammenhang zwischen den gemessenen Umgebungsbedingungen und auftretenden Ausfällen oder Störungen der elektrischen Geräte zu erkennen, so dass eigenständig angepasste Pläne zur vorbeugenden Wartung oder Vorhersagen über Ausfallwahrscheinlichkeiten erstellt werden. Treten beispielsweise bei den überwachten Geräten gehäuft Ausfälle nach bestimmten Temperaturveränderungen auf, so ist die künstliche Intelligenz durch eigenständiges Anlernen in der Lage, zukünftige Ausfälle bei entsprechenden Temperaturveränderungen vorherzusehen und bedarfsweise rechtzeitig entsprechende Wartungshinweise an einen Nutzer zu übermitteln.

In einer bevorzugten Ausgestaltung des erfindungsgemäßen Verfahrens erfolgt die Übertragung der Messsignale an die Umwandlungseinrichtung und/oder die Übertragung der in das normierte Datenformat übertragenen Messdaten in die Cloud zumindest abschnittsweise kabellos, insbesondere über Mobilfunk oder ein WLAN-Netzwerk. Eine derartige kabellose Übertragung bietet sich insbesondere an, wenn sich das zu überwachende elektrische Gerät an einem abgelegenen Standort befindet, der kabelgebunden nicht erreichbar ist.

Hinsichtlich weiterer vorteilhafter Ausgestaltungen der Erfindung wird auf die Unteransprüche, sowie auf die nachfolgende Beschreibung eines Ausführungsbeispiels unter Bezugnahme auf die beiliegende Zeichnung verwiesen. In der Zeichnung zeigt:
- FIG 1: eine Anordnung zur Durchführung eines Verfahrens gemäß der vorliegenden Erfindung in einer schematischen Darstellung;
- FIG 2: eine Detailansicht der Anordnung aus FIG 1 in einer schematischen Darstellung.

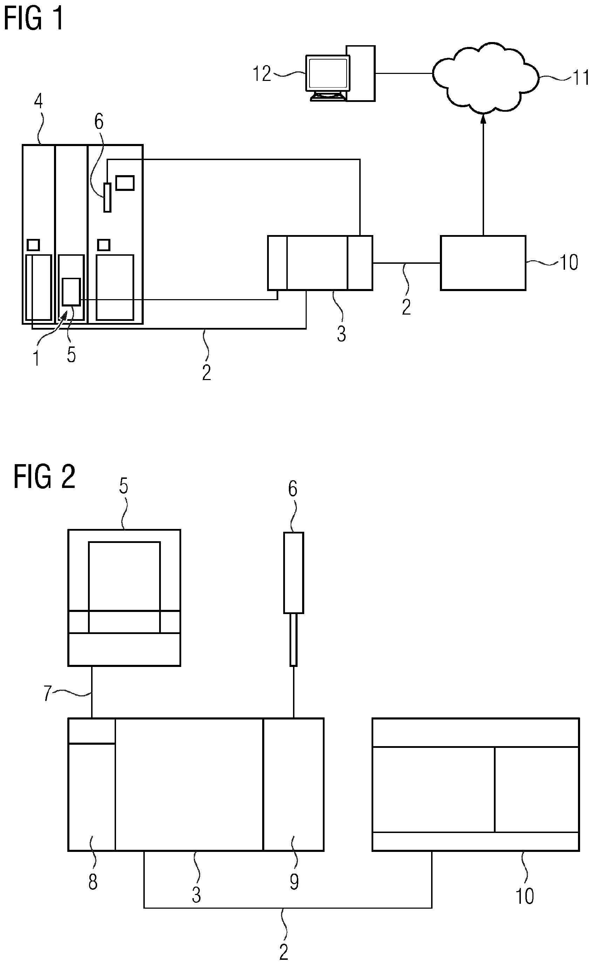

Die FIG 1 zeigt eine Anordnung zur Durchführung eines Verfahrens gemäß der vorliegenden Erfindung zur Zustandsüberwachung eines Frequenzumrichters 1.

Dieser wird vorliegend zur Steuerung von Motoren, welche nicht dargestellt sind, eingesetzt. Konkret wandelt der Frequenzumrichter 1 einen Eingangswechselstrom oder einen Eingangsdrehstrom in einen Ausgangswechsel- oder -Ausgangsdrehstrom um, wobei die Frequenz des Ausgangsstroms veränderlich ist und variiert werden kann, um die Drehzahl des angesteuerten Motors einzustellen.

Zur Ansteuerung des Frequenzumrichters 1 ist dieser über eine Profinet-Verbindung 2 mit einer speicherprogrammierbaren Steuerung 3, vorliegend eine S7-1200 der Siemens AG, kommunikativ verbunden. Die speicherprogrammierbare Steuerung 3 kann mit weiteren Komponenten gekoppelt sein, beispielsweise einer Mensch-Maschinen-Schnittstelle in Form eines Displays und/oder einer Eingabeeinheit, über welche ein Benutzer Befehle eingeben kann.

Der Frequenzumrichter 1 ist in einem Schaltschrank 4 untergebracht. Zur Überwachung sind zwei Sensorelemente 5, 6 vorgesehen.

Das Sensorelement 5 ist ausgelegt und geeignet, den Isolationswiderstand zu messen. Dazu ist das Sensorelement 5 mit dem Frequenzumrichter 1 mittels geeigneter Befestigungsmittel fest verbunden. An dem Sensorelement 5 ist ferner ein Datenkabel angeschlossen, welches mit einer Kommunikationsbaugruppe 8 der speicherprogrammierbaren Steuerung 3 kommunikativ verbunden ist. Dazu weist die Kommunikationsbaugruppe 8 vorliegend eine RS-485-Schnittstelle auf.

Das andere Sensorelement 6, welches als industrietaugliches Schaltschrankgerät ausgebildet ist und die Schutzart IP20 aufweist, ist nicht fest mit dem Frequenzumrichter 1 verbunden, sondern an einer anderen Position im Schaltschrank 4 angeordnet. Das Sensorelement 6 besitzt einen Sensor zur Temperaturmessung und einen Sensor zur Messung der Luftfeuchtigkeit. Über ein 4-adriges Datenkabel ist es mit einer Signalbaugruppe 9 der speicherprogrammierbaren Steuerung 3 kommunikativ verbunden. Die Signalbaugruppe 9 besitzt zwei Analogeingänge für ein Stromsignal von 4 bis 20 mA, wobei ein Analogeingang für die Messsignale der Temperaturmessung und der andere Analogeingang für die Messsignale der Luftfeuchtigkeitsmessung vorgesehen ist.

Die speicherprogrammierbare Steuerung 3 ist über eine Profinet-Verbindung 2 mit einer Übertragungseinrichtung 10 kommunikativ verbunden. Vorliegend handelt es sich bei der Übertragungseinrichtung 10 um ein Gerät der Siemens AG in der Ausführung MindConnect IOT. Dies ist rein beispielhaft zu verstehen. Die Übertragungseinrichtung 10 ist geeignet und ausgebildet, Daten an eine Cloud 11, vorliegend basierend auf der Mindsphere-Plattform, zu übertragen. Die Übertragung an die Cloud 11 geschieht vorliegend kabellos über eine geeignete, in der Übertragungseinrichtung 10 vorgesehene Mobilfunk-Schnittstelle.

Die Cloud 11 kann über das Internet erreicht werden, so dass die Übertragungseinrichtung 10 über eine Internetverbindung Daten an die Cloud 11 hochladen kann. Von einem beliebigen Rechner 12 und/oder einem mobilen Endgerät, wie beispielsweise einem Smartphone oder einem Tablet, welcher/welches ebenfalls über eine Internetverbindung verfügt, kann mittels einer App auf die Cloud 11 zugegriffen werden.

Zur Zustandsüberwachung des Frequenzumrichters 1 werden kontinuierlich von den Sensorelementen 5, 6 die betreffenden Zustandsgrößen, vorliegend der Isolationswiderstand, die Temperatur und die Luftfeuchtigkeit gemessen und entsprechende Messsignale bereitgestellt. Diese werden im Fall des Sensorelements 5 über ein Datenkabel 7 als digitale Signale an die speicherprogrammierbare Steuerung 3, vorliegend die Kommunikationsbaugruppe 8 übertragen. Im Fall des Sensorelements 6 werden zwei Messsignale in Form von Analogsignalen zwischen 4 und 20 mA für die Temperatur und die Luftfeuchtigkeit an die Signalbaugruppe 9 übertragen.

In der speicherprogrammierbaren Steuerung 3, die neben der Steuerfunktion für den Frequenzumrichter 1 auch als Umwandlungseinrichtung zum Umwandeln der Messsignale in ein normiertes Datenformat dient, werden die Messsignale in einen Datenbaustein umgewandelt, bzw. darin abgelegt.

Die in den Datenbaustein umgewandelten Messdaten werden über die Profinet-Verbindung 2 mit der Übertragungseinrichtung 10 in diese übertragen und von dort über eine Internet-Verbindung in die Cloud 11 hochgeladen und dort verarbeitet. Die verarbeiteten Daten werden für die Zustandsüberwachung herangezogen.

Der Verlauf der IST-Werte der gemessenen Zustandsgrößen wird in der Cloud 11 permanent, insbesondere kontinuierlich oder wiederholend oder zyklisch überwacht und abhängig vom Verlauf der IST-Werte werden Vorhersagen über das zukünftige Verhalten des Frequenzumrichters 1 getroffen. Ferner werden bei signifikanten Abweichungen der IST-Werte von eingegebenen SOLL-Werten bzw. bei Abweichungen um mehr als ein zulässiges Maß Wartungspläne erstellt, bzw. Wartungshinweise an den Nutzer des Frequenzumrichters 1 übermittelt, vorliegend über eine entsprechende App, welche auf dem Rechner 12 installiert ist. Diese App greift auf die in der Cloud 11 verarbeiteten Daten zu.

Somit ermöglicht das erfindungsgemäße Verfahren, sowie die Anordnung zur Durchführung des erfindungsgemäßen Verfahrens eine frühzeitige Fehlererkennung am Frequenzumrichter 1 und eine auf die Umgebungsbedingungen abgestimmte vorbeugende Wartung, um störungsbedingte Ausfälle zu vermeiden.

Durch die Nutzung der Cloud 11 können Vorgänge und Prozesse umfassend von einem beliebigen Ort auf der Welt aus überwacht werden, sofern ein Internetzugang zur Verfügung steht. Insbesondere wird es dadurch auch möglich, bei einer komplexen Automatisierungs-, etwa Fertigungsstruktur, die über mehrere Standorte verteilt ist, eine zentrale Überwachung der verschiedenen Prozessparameter vorzunehmen. Insbesondere können Messdaten mehrerer, an verschiedenen Standorten befindlicher elektrische Geräte, etwa Frequenzumrichter 1 an die Cloud 11 übermittelt und diese unter Nutzung der Cloud 11 zentral überwacht werden. Dabei wird es auch möglich, von verschiedenen Geräten 1 stammende Daten miteinander zu vergleichen.

Es sei angemerkt, dass die an die Cloud 11 übertragenen Messdaten auch mit Hilfe mindestens einer künstlichen Intelligenz, insbesondere wenigstens einer angelernten künstlichen Intelligenz, die in der Cloud 11 bereitstehen kann, ausgewertet werden können. Die Verwendung einer künstlichen Intelligenz kann es u.a. auch ermöglichen, eine Vielzahl von elektrischen Geräten, bevorzugt gleichen oder gleichartigen Geräten an verschiedenen Standorten zu überwachen und einen Zusammenhang zwischen den gemessenen Umgebungsbedingungen und auftretenden Ausfällen oder Störungen der elektrischen Geräte zu erkennen, so dass eigenständig angepasste Pläne zur vorbeugenden Wartung oder Vorhersagen über Ausfallwahrscheinlichkeiten erstellt werden können. Treten beispielsweise bei den überwachten Geräten gehäuft Ausfälle nach bestimmten Temperaturveränderungen auf, so ist die künstliche Intelligenz durch eigenständiges Anlernen in der Lage, zukünftige Ausfälle bei entsprechenden Temperaturveränderungen vorherzusehen und bedarfsweise rechtzeitig entsprechende Wartungshinweise an einen Nutzer zu übermitteln.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Zustandsüberwachung eines elektrischen Geräts, insbesondere eines Stromrichters, bevorzugt eines Frequenzumrichters (1), umfassend die folgenden Schritte:
- Messung von Zustandsgrößen direkt am elektrischen Gerät und/oder in der Umgebung des elektrischen Geräts und Bereitstellen von korrespondierenden Messsignalen;
- Übertragung der Messsignale an eine Umwandlungseinrichtung (3) ;
- Umwandlung der Messsignale in ein normiertes Datenformat durch die Umwandlungseinrichtung (3);
wobei die in das normierte Datenformat umgewandelten Messdaten durch eine geeignete Übertragungseinrichtung (10) in eine Cloud (11) hochgeladen werden und dort verarbeitet werden und für die Zustandsüberwachung herangezogen werden.

2. Verfahren nach Anspruch 1, **dadurch gekennzeichnet, dass** als Zustandsgrößen die Temperatur und/oder die Luftfeuchtigkeit und/oder akustische Signale und/oder Vibrationen und/oder Beschleunigungen und/oder der Isolationswiderstand und/oder die Zusammensetzung der Umgebungsluft gemessen werden.

3. Verfahren nach Anspruch 1 oder Anspruch 2, **dadurch gekennzeichnet, dass** die Messung der Zustandsgrößen in einem Schaltschrank (4), in welchem das elektrische Gerät angeordnet ist, stattfindet.

4. Verfahren nach einem der Ansprüche 1 bis 3, **dadurch gekennzeichnet, dass** die Messsignale als Analogsignale, insbesondere Ströme, bevorzugt zwischen 4 und 20 mA, oder Digital-Signale bereitgestellt werden.

5. Verfahren nach einem der vorherigen Ansprüche, **dadurch gekennzeichnet, dass** die Messsignale in der Umwandlungseinrichtung (3) in einen Datenbaustein umgewandelt oder abgelegt werden.

6. Verfahren nach einem der vorherigen Ansprüche, **dadurch gekennzeichnet, dass** die in das normierte Datenformat umgewandelten Messdaten an eine Cloud-Plattform übertragen wird.

7. Verfahren nach einem der vorherigen Ansprüche, **dadurch gekennzeichnet, dass** insbesondere unter Nutzung einer auf die Cloud (11) zugreifenden App ein Abgleich der an die Cloud (11) übertragenen Messdaten mit vorgegebenen SOLL-Werten stattfindet.

8. Verfahren nach Anspruch 7, **dadurch gekennzeichnet, dass** bei einer definierten Abweichung der IST-Werte von den SOLL-Werten eine Meldung an einen Nutzer des elektrischen Geräts automatisiert, bevorzugt über eine App, stattfindet.

9. Verfahren nach einem der vorherigen Ansprüche, **dadurch gekennzeichnet, dass** insbesondere unter Nutzung einer auf die Cloud (11) zugreifenden App die IST-Werte der gemessenen Zustandsgrößen bevorzugt kontinuierlich oder wiederholend oder zyklisch überwacht werden und/oder dass insbesondere unter Nutzung einer auf die Cloud (11) zugreifenden App abhängig von den IST-Werten der gemessenen Zustandsgrößen, insbesondere abhängig vom Verlauf der IST-Werte Vorhersagen über das zukünftige Verhalten des elektrischen Geräts getroffen werden und/oder Wartungspläne erstellt werden und/oder Wartungshinweise an einen Nutzer des entsprechenden Geräts übermittelt werden.

10. Verfahren nach einem der vorherigen Ansprüche, **dadurch gekennzeichnet, dass** die an die Cloud (11) übertragenen Messdaten mit Hilfe mindestens einer künstlichen Intelligenz ausgewertet werden.

11. Verfahren nach einem der vorherigen Ansprüche, **dadurch gekennzeichnet, dass** die Übertragung der Messsignale an die Umwandlungseinrichtung (3) und/oder die Übertragung der in das normierte Datenformat übertragenen Messdaten in die Cloud (11) zumindest abschnittsweise kabellos, insbesondere über Mobilfunk oder ein WLAN-Netzwerk, erfolgt.

12. Anordnung zur Durchführung eines Verfahrens nach einem der vorherigen Ansprüche zur Zustandsüberwachung eines elektrischen Geräts, insbesondere eines Stromrichters, bevorzugt eines Frequenzumrichters (1), umfassend:
- mindestens ein Sensorelement zur Messung der Zustandsgrö-βen;
- eine Umwandlungseinrichtung (3), welche mit dem Sensorelement (5, 6) kommunikativ verbunden ist, zum Umwandeln des bereitgestellten Messsignals in ein normiertes Datenformat, insbesondere in einen Datenbaustein;
- eine Übertragungseinrichtung (10), welche mit der Umwandlungseinrichtung kommunikativ kabellos oder kabelgebunden verbunden ist, sowie ausgebildet und/oder eingerichtet ist, Daten an eine Cloud (11) zu übertragen.

13. Anordnung nach Anspruch 12, **dadurch gekennzeichnet, dass** das mindestens eine Sensorelement (5, 6) einen Sensor zur Temperaturmessung, insbesondere mittels Infrarot-Messung, und/oder einen Sensor zur Messung der Luftfeuchtigkeit und/oder einen Sensor zur Messung akustischer Signale und/oder einen Sensor zur Messung von Vibrationen und/oder einen Sensor zur Messung von Beschleunigungen und/oder einen Sensor zur Messung der Gaszusammensetzung und/oder einen Sensor zur Widerstandsmessung aufweist.

14. Anordnung nach Anspruch 12 oder 13, **dadurch gekennzeichnet, dass** das mindestens eine Sensorelement (5, 6) industrietauglich ausgeführt ist, insbesondere als Schaltschrankgerät ausgebildet ist, und/oder die Schutzart von IP20 oder höher aufweist.

15. Anordnung nach einem der Ansprüche 12 bis 14, **dadurch gekennzeichnet, dass** das mindestens eine Sensorelement (5, 6) einen Ausgang für ein Analogsignal, insbesondere für ein Stromsignal, bevorzugt von 4 bis 20 mA, oder eine BUS-Schnittstelle, insbesondere eine Profibus-Schnittstelle, aufweist.

16. Anordnung nach einem der Ansprüche 12 bis 15, **dadurch gekennzeichnet, dass** das mindestens eine Sensorelement (5, 6) Befestigungsmittel zum Anbringen in einem Schaltschrank (4), insbesondere an einer Hutprofilschiene, oder an einem elektrischen Gerät, insbesondere an einem Stromrichter, bevorzugt an einem Frequenzumrichter (1) aufweist.

17. Anordnung nach einem der Ansprüche 12 bis 16, **dadurch gekennzeichnet, dass** die Umwandlungseinrichtung als speicherprogrammierbare Steuerung ausgebildet ist.

18. Anordnung nach einem der Ansprüche 12 bis 17, **dadurch gekennzeichnet, dass** die Umwandlungseinrichtung einen Eingang für ein Analogsignal und/oder eine BUS-Schnittstelle, insbesondere eine Profibus-Schnittstelle, und/oder eine serielle Schnittstelle, insbesondere eine RS232- oder RS485-Schnittstelle, aufweist.

19. Anordnung nach einem der Ansprüche 12 bis 18, **dadurch gekennzeichnet, dass** die Umwandlungseinrichtung Ausgänge für Signale aufweist, insbesondere in Form einer BUS-Schnittstelle und/oder einer kabellosen Schnittstelle, insbesondere einer Mobilfunk-Schnittstelle.

20. Anordnung nach einem der Ansprüche 12 bis 19, **dadurch gekennzeichnet, dass** die Übertragungseinrichtung (10) mindestens eine USB-Schnittstelle und/oder eine RS232-Schnittstelle und/oder eine LAN-Schnittstelle aufweist.
